# FASCICULE DE BREVET EUROPEEN

(11) **EP 3 847 403 B1**
(45) Date de publication et mention de la délivrance du brevet: **14.01.2026**
(21) Numéro de dépôt: 19779531.3
(22) Date de dépôt: 26.08.2019
(51) Int. Cl.: F25B 25/00, C09K 5/04, F25B 29/00, F25B 7/00

(54) **PROCEDE ET INSTALLATION DE CONDITIONNEMENT D'AIR**
VERFAHREN UND VORRICHTUNG ZUR KLIMATISIERUNG
AIR CONDITIONING PROCESS AND INSTALLATION

(30) Priorité: 03.09.2018 FR 1857886
(43) Date de publication de la demande: 14.07.2021
(73) Titulaire: ARKEMA FRANCE, 92800 Puteaux (FR)
(72) Inventeur: RACHED, Wissam, 92705 COLOMBES cedex (FR)
(74) Mandataire: Arkema Patent
(86) Numéro de dépôt international: PCT/FR2019/051964
(87) Numéro de publication internationale: WO 2020/049239

(56) Documents cités:
- WO-A1-2017/143018
- JP-A- 2011 127 864
- US-A1- 2010 252 232
- ALAM MD JAHANGIR ET AL: "Measurement of Viscosity of cis -1,1,1,4,4,4-Hexafluoro-2-butene (R-1336mzz(Z)) by Tandem Capillary Tubes Method", JOURNAL OF CHEMICAL AND ENGINEERING DATA., vol. 63, no. 5, 10 May 2018 (2018-05-10), US, pages 1706 - 1712, XP055963460, ISSN: 0021-9568, DOI: 10.1021/acs.jced.8b00036

## Description

### DOMAINE DE L'INVENTION

La présente invention concerne un procédé de conditionnement d'air au moyen d'un circuit de compression de vapeur dans lequel circule un premier fluide frigorigène, couplé avec un circuit secondaire n'ayant pas de compresseur, dans lequel circule un deuxième fluide frigorigène non-inflammable. L'invention concerne également une installation adaptée à la mise en œuvre de ce procédé.

### ARRIERE-PLAN TECHNIQUE

La technologie de chauffage et/ou de climatisation des bâtiments est basée sur l'utilisation d'un circuit de compression de vapeur dans lequel circule un fluide frigorigène. Plus précisément, lorsqu'il s'agit du conditionnement d'air (chauffage et climatisation) des différentes pièces d'un bâtiment, ou de plusieurs bâtiments, le fluide frigorigène doit circuler entre une unité située à l'extérieur du bâtiment et des différentes unités situées à l'intérieur du bâtiment.

Par exemple, les documents EP 1876398, EP 3048387, EP 3279576, EP 3318808, EP 3312527 et WO 2018/005670 décrivent différents systèmes de conditionnement d'air stationnaires utilisés pour le chauffage et/ou la climatisation des bâtiments.

Le R-410A est le fluide le plus souvent utilisé dans ce type de système. Le R-410A est un fluide de frigorigène constitué de 50 % en poids de difluorométhane (HFC-32) et de 50 % en poids de pentafluoroéthane (HFC-125). Il présente un bas point d'ébullition à -48,5°C, une efficacité énergétique élevée, il est non-inflammable et non toxique. Toutefois, ce fluide de transfert de chaleur présente un potentiel de réchauffement climatique (GWP) élevé (2100).

Le HFC-32 lui-même, ayant un GWP de 675, peut difficilement remplacer le R-410A en tant que tel. En effet, le HFC-32 est classé (suivant la norme ASHRAE 34) comme fluide légèrement inflammable, ce qui pose des problèmes de sécurité lorsqu'il est utilisé dans des systèmes et des installations centralisées telles que mentionnées ci-dessus. Par exemple, la charge maximale par circuit devrait être réduite afin de limiter la circulation du fluide inflammable à l'intérieur du bâtiment ce qui aurait comme résultat une réduction des performances du système.

Le document EP 2341297 décrit un dispositif de conditionnement d'air comprenant un circuit dans lequel un fluide frigorigène circule, ce circuit étant couplé avec un circuit secondaire dans lequel de l'eau comprenant du liquide antigel est utilisé comme fluide caloporteur monophasique.

Aussi le document WO 2017/143018 A1 décrit un dispositif de conditionnement d'air comprenant un circuit dans lequel un fluide frigorigène circule, ce circuit étant couplé avec un circuit secondaire utilisant, par exemple, HFO-1234ze ou HCFO-1233zd. Ce document représente l'état de la technique le plus proche de la présente invention.

Cette solution présente cependant une contrainte sur les dimensions des installations étant donné que l'utilisation d'un fluide monophasique a pour conséquence une augmentation considérable des dimensions de tuyauterie, une énergie de pompage plus élevée, ainsi qu'un cout plus élevé lié à l'intégration de ce type de système dans des bâtiments.

Le document WO 2017/099814 décrit un dispositif pour obtenir de l'eau à haute température, en utilisant de la chaleur récupérée d'une source de chaleur et en utilisant également un fluide frigorigène (le HCFO-1233zdE, le HCFO-1233zdZ, le HFO-1336mzzZ, le HFO-1336mzzE étant cités parmi autres) capable de transférer de la chaleur de la source de chaleur vers l'eau.

Aussi la publication ALAM MD JAHANGIR ET AL: "Measurement of Viscosity of cis -1,1,1,4,4,4-Hexafluoro-2-butene (R-1336mzz(Z)) by Tandem Capillary Tubes Method", JOURNAL OF CHEMICAL AND ENGINEERING DATA., vol. 63, no. 5, 10 mai 2018 (2018-05-10), pages 1706-1712 décrit l'utilisation de R-1336mzzZ particulièrement dans les pompes à chaleur à haute température.

Il existe donc un besoin de fournir une méthode pour le conditionnement d'air, notamment pour le chauffage et la climatisation stationnaire, efficace et sécurisée, tout en limitant les dimensions de l'installation, les couts énergétiques ainsi que les couts liés à la mise en œuvre de la méthode.

### RESUME DE L'INVENTION

L'invention concerne en premier lieu un procédé de conditionnement de l'air, comme défini par la revendication indépendante 1 annexée, au moyen d'un circuit principal, le circuit principal étant un circuit de compression de vapeur, dans lequel circule un premier fluide frigorigène, et d'un circuit secondaire dépourvu de compresseur, dans lequel circule un deuxième fluide frigorigène non-inflammable comprenant une hydrofluorooléfine et/ou une hydrochlorofluorooléfine, le circuit principal et le circuit secondaire étant couplés l'un avec l'autre ; le procédé comprenant un échange de chaleur entre l'environnement et le premier fluide frigorigène, un échange de chaleur entre le premier et le deuxième fluide frigorigène, et un échange de chaleur entre le deuxième fluide frigorigène et l'air à conditionner.

Dans certains modes de réalisation, le premier fluide frigorigène comprend une hydrofluorooléfine, une hydrochlorofluorooléfine, un hydrofluorocarbure, un hydrochlorofluorocarbure, et/ou des mélanges de ceux-ci ; et de préférence le premier fluide frigorigène comprend du 1,3,3,3-tetrafluoropropène, du 2,3,3,3-tétrafluoropropène, du difluorométhane, du pentafluoroéthane, du 1,1,2,2 tétrafluoroéthane, du 1,1,1,2-tétrafluoroéthane, du 1,1-difluoroéthane, du fluoroéthane, du 1,1,1,2,3,3,3 heptafluoropropane, du 1,1,1-trifluoropropane, du trifluoroiodométhane, du 1,1,2-trifluoroéthylène et ou des mélanges de ceux-ci.

Selon l'invention, le deuxième fluide frigorigène comprend ou consiste en du 1,1,1,4,4,4-hexafluoro-2-butène sous forme cis et/ou trans.

Dans certains modes de réalisation, le deuxième fluide frigorigène, au cas où il ne consiste pas complètement en 1,1,1,4,4,4-hexafluoro-2-butène, a une température d'ébullition inférieure à 50°C, etde préférence inférieure à 40°C. Quand le réfrigérant consiste complètement en 1,1,1,4,4,4-hexafluoro-2-butène, sa température d'ébullition est toujours inférieure à 40°C.

Dans certains modes de réalisation, le procédé est un procédé de climatisation, et/ou de chauffage de l'air.

Dans certains modes de réalisation, le procédé est un procédé de conditionnement d'air stationnaire, de préférence un procédé de conditionnement d'air de locaux d'habitation, de locaux industriels et/ou de locaux commerciaux.

L'invention concerne également une installation pour le conditionnement de l'air, comme définie par la revendication indépendante 6 annexée, comprenant :
- un circuit principal, le circuit principal étant un circuit de compression de vapeur, dans lequel circule un premier fluide frigorigène, ce circuit principal comportant un échangeur de chaleur permettant l'échange de chaleur entre le premier fluide frigorigène et l'environnement ; et
- un circuit secondaire dépourvu de compresseur, dans lequel circule un deuxième fluide frigorigène non inflammable comprenant une hydrofluorooléfine et/ou une hydrochlorofluorooléfine, ce circuit secondaire comportant un échangeur de chaleur permettant l'échange de chaleur entre le deuxième fluide frigorigène et l'air à conditionner ;
le circuit principal et le circuit secondaire étant couplés l'un avec l'autre par au moins un échangeur de chaleur.

Dans certains modes de réalisation, le premier fluide frigorigène comprend une hydrofluorooléfine, une hydrochlorofluorooléfine, un hydrofluorocarbure, un hydrochlorofluorocarbure, et/ou des mélanges de ceux-ci ; et de préférence le premier fluide frigorigène comprend du 1,3,3,3-tetrafluoropropène, du 2,3,3,3-tétrafluoropropène, du difluorométhane, du chlorodifluorométhane, du pentafluoroéthane, du 1,1,2,2 tétrafluoroéthane, du 1,1,1,2-tétrafluoroéthane, du 1,1-difluoroéthane, du fluoroéthane, du 1,1,1,2,3,3,3 heptafluoropropane, du 1,1,1-trifluoropropane ou des mélanges de ceux-ci.

Selon l'invention, le deuxième fluide frigorigène comprend du 1,1,1,4,4,4-hexafluoro-2-butène sous forme cis et/ou trans.

Dans certains modes de réalisation, le deuxième fluide frigorigène a une température d'ébullition inférieure à 50°C, etde préférence inférieure à 40°C.

Dans certains modes de réalisation, le circuit secondaire comprend au moins une pompe.

Dans certains modes de réalisation, l'installation est configurée pour la climatisation et/ou le chauffage de l'air, et de préférence configurée pour la climatisation et le chauffage de l'air, de manière séquentielle ou éventuellement simultanée.

Dans certains modes de réalisation, l'installation est configurée pour le conditionnement d'air stationnaire, de préférence configurée pour le conditionnement d'air de locaux d'habitation, de locaux industriels et/ou de locaux commerciaux.

Dans certains modes de réalisation, l'installation est configurée pour le conditionnement d'air de locaux, dans laquelle le circuit principal est situé à l'extérieur des locaux, et le circuit secondaire est situé au moins en partie dans les locaux.

Dans certains modes de réalisation, l'installation comprend un échangeur de chaleur dans lequel le premier fluide frigorigène et le deuxième fluide frigorigène échangent de la chaleur pour fournir la climatisation de l'air, et un autre échangeur de chaleur dans lequel le premier fluide frigorigène et le deuxième fluide frigorigène échangent de la chaleur pour fournir le chauffage de l'air.

Le procédé de l'invention tel que décrit ci-dessus peut être mis en œuvre dans l'installation de l'invention telle que décrite ci-dessus. Réciproquement, l'installation de l'invention telle que décrite ci-dessus peut être configurée pour la mise en œuvre du procédé de l'invention tel que décrit ci-dessus.

La présente invention permet de répondre au besoin exprimé dans l'état de la technique. Elle fournit plus particulièrement une méthode pour le conditionnement d'air, notamment pour le chauffage et la climatisation stationnaire, efficace et sécurisée, tout en limitant les dimensions de l'installation, les couts énergétiques ainsi que les couts liés à la mise en œuvre de la méthode.

Cela est accompli grâce à l'utilisation d'un fluide frigorigène non-inflammable comprenant une hydrofluorooléfine et/ou une hydrochlorofluorooléfine, et comprend ou consiste en du 1,1,1,4,4,4-hexafluoro-2-butène sous forme cis et/ou trans, dans un circuit secondaire, couplé à un circuit de compression de vapeur comprenant un autre fluide frigorigène, qui peut éventuellement être inflammable. L'invention permet la circulation sécurisée du fluide frigorigène non-inflammable dans toute zone sensible, comme par exemple des bâtiments, sans limitation de la charge maximale par circuit.

De plus, le liquide frigorigène non-inflammable selon l'invention, subit de préférence un changement de phase dans le circuit secondaire, de préférence encore à une température inférieure à 50°C et à une pression de 1 bar, ce qui permet le transport d'une quantité importante de calories en gardant un diamètre relativement faible en tuyauterie ainsi qu'un débit faible. Ainsi, l'énergie consommée pour la circulation du fluide frigorigène est plus faible que celle d'un système monophasique.

Enfin, dans des modes de réalisation, le fluide frigorigène non-inflammable selon l'invention reste à une température constante dans les échangeurs, ce qui permet de diminuer la différence de température avec l'autre fluide frigorigène et donc augmenter l'efficacité du système.

### BREVE DESCRIPTION DES FIGURES

La **figure 1** représente de manière schématique le circuit principal selon un mode de réalisation.
La **figure 2** représente de manière schématique le circuit secondaire qui est couplé au circuit principal selon un mode de réalisation.

### DESCRIPTION DE MODES DE REALISATION DE L'INVENTION

L'invention est maintenant décrite plus en détail et de façon non limitative dans la description qui suit.

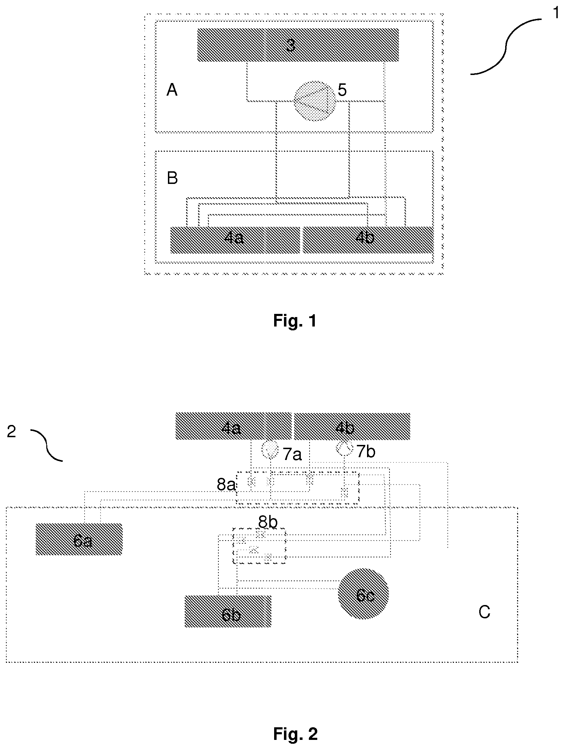

L'invention concerne un procédé de conditionnement d'air mis en œuvre au moyen d'une installation de conditionnement d'air. En faisant référence à la **figure 1** et à la **figure 2****,** l'installation comprend un circuit principal 1 qui est un circuit de compression de vapeur dans lequel circule un premier fluide frigorigène, et un circuit secondaire 2 dans lequel circule un deuxième fluide frigorigène non-inflammable, le circuit principal 1 et le circuit secondaire 2 étant couplés l'un avec l'autre, par l'intermédiaire d'au moins un échangeur de chaleur 4a, 4b.

Par « *fluide frigorigène* », on entend un fluide susceptible d'absorber de la chaleur en s'évaporant à basse température et basse pression et de rejeter de la chaleur en se condensant à haute température et haute pression, dans un circuit de compression de vapeur, selon l'application considérée. De manière générale, un fluide frigorigène peut consister essentiellement en un seul composé de transfert de chaleur ou être un mélange de plusieurs composés de transfert de chaleur.

Le procédé selon l'invention peut être un procédé de conditionnement d'air stationnaire. Par exemple, le procédé selon l'invention peut être mis en œuvre pour le conditionnement d'air de locaux d'habitation, de locaux industriels ou de locaux commerciaux.

Par « *conditionnement de l'air* », on entend ici le traitement de l'air permettant d'en contrôler notamment la température (et le cas échéant l'hygrométrie). Le conditionnement de l'air peut notamment comprendre le refroidissement de l'air (appelé ici climatisation) et le chauffage de l'air.

Le procédé selon l'invention peut ainsi être un procédé de climatisation.

Alternativement, le procédé selon l'invention peut être un procédé de chauffage.

Alternativement, le procédé selon l'invention peut être un procédé dans lequel une ou plusieurs phases de climatisation alternent avec une ou plusieurs phases de chauffage.

Alternativement et avantageusement, le procédé selon l'invention peut être un procédé qui assure simultanément le chauffage et la climatisation, par exemple dans des locaux ou parties de locaux distincts.

Ainsi, ce procédé est particulièrement utile lorsque différentes pièces et/ou différents locaux ont des besoins différents en conditionnement d'air.

### Circuit principal

Le circuit principal 1 ou circuit de compression de vapeur comporte une boucle frigorifique, qui de préférence est réversible, dans laquelle circule le premier fluide frigorigène.

Le circuit principal 1 fonctionne selon un cycle classique de compression de vapeur. Le cycle comprend le changement d'état du fluide frigorigène d'une phase liquide (ou diphasique liquide/vapeur) vers une phase vapeur à une pression relativement faible, puis la compression du fluide frigorigène en phase vapeur jusqu'à une pression relativement élevée, le changement d'état (condensation) du fluide frigorigène de la phase vapeur vers la phase liquide à une pression relativement élevée, et la réduction de la pression pour recommencer le cycle.

Le circuit principal 1 peut ainsi comprendre un premier échangeur de chaleur 3, au moins un deuxième échangeur de chaleur 4a, 4b, un compresseur 5, un détendeur (non-illustré sur la figure) ainsi que des moyens d'inversion du fonctionnement de la boucle frigorifique réversible. Le circuit principal 1 peut également comprendre des canalisations, tuyaux, flexibles, réservoir ou autres, dans lesquels circule le premier fluide frigorigène, entre les différents échangeurs, détendeurs, vannes...

Le premier échangeur de chaleur 3 permet l'échange de la chaleur entre le premier fluide frigorigène et l'environnement, à savoir en général l'air de l'extérieur. Cet échange de chaleur peut être direct ou indirect (*via* un fluide caloporteur). Il est de préférence direct. Ainsi, le premier échangeur de chaleur 3 est de préférence traversé à la fois par l'air de l'extérieur et par le premier fluide frigorigène. Grâce à des moyens d'inversion du fonctionnement de la boucle frigorifique réversible, le premier échangeur de chaleur 3 peut jouer le rôle d'un condenseur dans un mode de climatisation ou le rôle d'un évaporateur dans un mode de chauffage.

Au moins un deuxième échangeur de chaleur 4a, 4b permet l'échange de la chaleur entre le premier fluide frigorigène et le deuxième fluide frigorigène qui circule dans le circuit secondaire 2. Ainsi, le deuxième échangeur de chaleur 4a, 4b est traversé à la fois par le premier fluide frigorigène et par le deuxième fluide frigorigène. Il est ainsi également considéré comme faisant partie du circuit secondaire 2. Le deuxième échangeur 4a, 4b de chaleur peut jouer le rôle d'un condenseur ou le rôle d'un évaporateur pour le premier fluide frigorigène.

De préférence, le circuit principal 1 comporte au moins un deuxième échangeur de chaleur 4a pour la climatisation de l'air, et au moins un deuxième échangeur de chaleur 4b pour le chauffage de l'air, qui sont tels que décrits ci-dessus. Cela permet à l'installation d'assurer des fonctions de climatisation et de chauffage, le cas échéant de manière simultanée. Le deuxième échangeur de chaleur 4a pour la climatisation joue le rôle d'évaporateur vis-à-vis du premier fluide frigorigène, et le deuxième échangeur de chaleur 4b pour le chauffage joue le rôle de condenseur vis-à-vis du premier fluide frigorigène. Dans ce cas, le circuit secondaire 2 comporte de préférence deux sous-circuits séparés, l'un comprenant le deuxième échangeur de chaleur 4a pour la climatisation et l'autre comprenant le deuxième échangeur de chaleur 4b pour le chauffage.

Il est possible d'utiliser tout type d'échangeur de chaleur dans l'invention, et notamment des échangeurs de chaleur à co-courant ou, de préférence, des échangeurs de chaleur à contre-courant.

Par « *échangeur de chaleur à contre-courant* », on entend un échangeur de chaleur dans lequel de la chaleur est échangée entre un premier fluide et un deuxième fluide, le premier fluide à l'entrée de l'échangeur échangeant de la chaleur avec le deuxième fluide à la sortie de l'échangeur, et le premier fluide à la sortie de l'échangeur échangeant de la chaleur avec le deuxième fluide à l'entrée de l'échangeur.

Par exemple, les échangeurs de chaleur à contre-courant comprennent les dispositifs dans lesquels le flux du premier fluide et le flux du deuxième fluide sont dans des directions opposées, ou quasiment opposées. Les échangeurs fonctionnant en mode courant croisé à tendance contre-courant sont également compris parmi les échangeurs de chaleur à contre-courant.

Dans des modes de réalisation, les moyens d'inversion du fonctionnement de la boucle frigorifique réversible du circuit principal 1 sont des moyens d'inversion du fonctionnement de la boucle frigorifique entre une position en mode climatisation et une position en mode chauffage.

Les moyens d'inversion susmentionnés peuvent être des moyens de modification du parcours du premier fluide frigorigène dans la boucle frigorifique réversible, ou des moyens d'inversion du sens de circulation du premier fluide frigorigène dans ladite boucle.

Les moyens d'inversion susmentionnés peuvent être une vanne à quatre voies, une vanne d'inversion, une vanne d'arrêt (de fermeture), un détendeur, ou leurs combinaisons.

Le compresseur 5 peut être hermétique, semi-hermétique ou ouvert. Les compresseurs hermétiques comprennent une partie moteur et une partie compression qui sont confinées dans une enceinte hermétique non démontable. Les compresseurs semi-hermétiques comprennent une partie moteur et une partie compression qui sont directement assemblées l'une contre l'autre. L'accouplement entre la partie moteur et la partie compression est accessible en dissociant les deux parties par démontage. Les compresseurs ouverts comprennent une partie moteur et une partie compression qui sont séparées. Ils peuvent fonctionner par entraînement par courroie ou par accouplement direct.

A titre de compresseur, on peut utiliser notamment un compresseur dynamique, ou un compresseur à déplacement positif.

Les compresseurs dynamiques comprennent les compresseurs axiaux et les compresseurs centrifuges, qui peuvent être à un ou plusieurs étages. Les mini-compresseurs centrifuges peuvent également être employés.

Les compresseurs à déplacement positif comprennent les compresseurs rotatifs et les compresseurs alternatifs.

Les compresseurs alternatifs comprennent les compresseurs à diaphragme et les compresseurs à piston.

Les compresseurs rotatifs comprennent les compresseurs à vis, les compresseurs à lobes, les compresseurs scroll (ou à spirale), les compresseurs à anneau liquide, et les compresseurs à palette. Les compresseurs à vis peuvent être de préférence bi-vis ou mono-vis.

Le compresseur peut comprendre un dispositif d'injection de vapeur ou de liquide. L'injection consiste à faire introduire dans le compresseur du réfrigérant à l'état liquide ou vapeur à un niveau intermédiaire entre le début et la fin de compression.

Le compresseur peut être entraîné par un moteur électrique ou par une turbine à gaz ou par engrenage.

Lorsque l'installation de conditionnement d'air est destinée au conditionnement de l'air d'un ou plusieurs bâtiments, le circuit principal 1 peut être situé totalement à l'extérieur du ou des bâtiments. Alternativement, le circuit principal 1 peut être situé à l'intérieur d'un bâtiment, dans un emplacement tel qu'une pièce (différent de l'emplacement où l'air est conditionné) comprenant des moyens de ventilation. Encore alternativement, une première partie (comprenant le compresseur 5 et le premier échangeur de chaleur 3) du circuit principal 1 peut être située à l'extérieur du ou des bâtiments, alors qu'une deuxième partie (comprenant le ou les deuxièmes échangeurs de chaleur 4a, 4b) peut être située dans un emplacement tel qu'une pièce (différent de l'emplacement où l'air est conditionné) comprenant des moyens de ventilation.

Le premier fluide frigorigène circulant dans le circuit principal 1 peut comprendre un ou plusieurs composés de transfert de chaleur choisis parmi une hydrofluorooléfine, une hydrochlorofluorooléfine, un hydrofluorocarbure, un hydrochlorofluorocarbure, ainsi que des combinaisons de ceux-ci. Parmi les hydrofluorooléfines, on peut notamment citer le 1,3,3,3-tetrafluoropropène (HFO-1234ze) sous forme cis et/ou trans et de préférence sous forme trans, et le 2,3,3,3-tétrafluoropropène (HFO-1234yf). Parmi les hydrofluorocarbures, on peut citer notamment le difluorométhane (HFC-32), le pentafluoroéthane (HFC-125), le 1,1,2,2-tétrafluoroéthane (HFC-134), le 1,1,1,2-tétrafluoroéthane (HFC-134a), le 1,1-difluoroéthane (HFC-152a), le fluoroéthane (HFC-161), le 1,1,1,2,3,3,3-heptafluoropropane (HFC-227ea), le 1,1,1-trifluoropropane (HFC-263fb), le trifluoroiodométhane et le 1,1,2-trifluoroéthylène (HFO-1123).

Le premier fluide frigorigène consiste essentiellement, voire consiste, en un ou plusieurs composés de transfert de chaleur.

Dans certains modes de réalisation, le premier fluide frigorigène consiste ou consiste essentiellement en du HFC-32, du R-459A (68 % HFC-32, 26 % HFO-1234yf, 6 % HFO-1234zeE), du R-454B (68,9 % HFC-32, 31,1 % HFO-1234yf), du R-454A (35 % HFC-32, 65 % HFO-1234yf), du R-452B (67 % HFC-32, 7 % HFC-125, 26 % HFO-1234yf) du R-463A (6 % CO₂ ou R-744, 36 % HFC-32, 30 % HFC-125, 14 % HFC-134a, 14 % HFO-1234yf), du R-513A (56 % HFO-1234yf, 44 % HFC-134a), du R-446A (68 % HFC-32, 29 % HFO-1234zeE, 3 % n-butane ou R-600) du R-447A (68 % HFC-32, 8 % HFC-125, 24 % HFO-1234zeE), du R-447B (68 % HFC-32, 3,5 % HFC-125, 28,5 % HFO-1234zeE), du AMOLEA 460X (68 % HFC-32, 32 % HFO-1123), du AMOLEA 400X (60 % HFC-32, 40 % HFO-1123), du AMOLEA 370X (55 % HFC-32, 45 % HFO-1123), du AMOLEA 300X (40 % HFC-32, 60 % HFO-1123), du HFO-1234yf ou du HFO-1234ze ainsi que des combinaisons de ceux-ci.

Dans certains modes de réalisation, le premier fluide frigorigène est associé, dans le circuit principal 1, à des lubrifiants et/ou des additifs - pour former une première composition de transfert de chaleur.

Les additifs qui peuvent être présents en association avec le premier fluide frigorigène peuvent notamment être choisis parmi les nanoparticules, les stabilisants, les tensioactifs, les agents traceurs, les agents fluorescents, les agents odorants et les agents de solubilisation.

La quantité totale en additifs n'excède de préférence pas 5 % en poids, en particulier 4 %, en plus particulier 3 % et tout particulièrement 2 % en poids voire 1 % en poids de premier fluide frigorigène.

Dans certains modes de réalisation, le premier fluide frigorigène contient des impuretés. Lorsqu'elles sont présentes, elles peuvent représenter moins de 1 %, de préférence moins de 0,5 %, de préférence moins de 0,1 %, de préférence moins de 0,05 % et de préférence moins de 0,01 % (en poids) par rapport au premier fluide frigorigène.

Un ou plusieurs lubrifiants peuvent être présents en association avec le premier fluide frigorigène. Ces lubrifiants peuvent être choisis parmi des esters de polyols (POE), des polyalkylène glycols (PAG), ou des éthers de polyvinyle (PVE).

Les lubrifiants peuvent représenter de 0 à 60 %, de préférence de 1 à 40 % et de préférence encore de 2 à 30 % (en poids) par rapport au premier fluide frigorigène.

De préférence, le premier fluide frigorigène dans le circuit principal 1 contient un ou plusieurs composés de transfert de chaleur inflammables ; ou ce premier fluide frigorigène est lui-même inflammable.

Le caractère « *inflammable* » d'un fluide est apprécié au sens de la norme ASHRAE 34-2007, avec une température de test de 60°C au lieu de 100°C.

### Circuit secondaire

Le circuit secondaire 2, dans lequel circule le deuxième fluide frigorigène, ne contient pas de compresseur.

Le circuit secondaire 2 peut comprendre un ou plusieurs échangeurs de chaleurs appelés ici échangeurs de chaleur additionnels 6a, 6b, 6c, qui permettent l'échange de la chaleur entre le deuxième fluide frigorigène et l'air qui est conditionné. Cet échange de chaleur peut être direct ou indirect (*via* un fluide caloporteur). Il est de préférence direct.

Ainsi, les échangeurs de chaleur additionnels 6a, 6b, 6c sont de préférence traversés à la fois par le deuxième fluide frigorigène et par l'air qui est conditionné. Les échangeurs de chaleur additionnels 6a, 6b, 6c peuvent jouer le rôle de condenseurs ou le rôle d'évaporateurs, pour le deuxième fluide frigorigène, selon que l'air est chauffé, ou respectivement refroidi. Par exemple, si le procédé selon l'invention est utilisé pour le conditionnement d'air de différentes pièces d'un bâtiment, le nombre d'échangeurs de chaleur additionnels 6a, 6b, 6c est de préférence au moins égal au nombre des pièces dont l'air est conditionné.

Les échangeurs de chaleurs sont de préférence tels que décrits ci-dessus en relation avec le circuit principal 1.

Le circuit secondaire 2 est pourvu de canalisations, tuyaux, ou autres, qui relient le ou les deuxièmes échangeurs de chaleur 4a, 4b avec le ou les échangeurs de chaleur additionnels 6a, 6b, 6c du circuit secondaire 2.

Le circuit secondaire 2 comprend de préférence au moins une pompe 7a pour forcer la circulation du deuxième fluide frigorigène dans le circuit secondaire 2, entre l'au moins un deuxième échangeur de chaleur 4a du circuit principal 1 et l'un ou les échangeurs de chaleur additionnels 6a, 6b, 6c du circuit secondaire 2.

Lorsque l'installation selon l'invention comprend au moins un deuxième échangeur de chaleur 4a pour la climatisation, et au moins un deuxième échangeur de chaleur 4b pour le chauffage, le circuit secondaire 2 peut comprendre une pompe 7a associée au deuxième échangeur de chaleur 4a pour la climatisation (qui de préférence est configurée pour pomper le deuxième fluide frigorigène du deuxième échangeur de chaleur 4a vers les échangeurs de chaleur additionnels 6a, 6b, 6c), et une autre pompe 7b associée au deuxième échangeur de chaleur 4b pour le chauffage (qui de préférence est configurée pour pomper le deuxième fluide frigorigène des échangeurs de chaleur additionnels 6a, 6b, 6c vers le deuxième échangeur de chaleur 4b).

Lorsque l'installation de conditionnement d'air est destinée au conditionnement de l'air d'un ou plusieurs bâtiments, le circuit secondaire 2 peut être disposé en tout ou partie, et de préférence en partie, à l'intérieur du ou des bâtiments C. Comme décrit ci-dessus, le ou les deuxièmes échangeurs 4a, 4b peuvent être situés à l'extérieur du ou des bâtiments C, comme illustré sur la **figure 2****.** Alternativement, le ou les deuxièmes échangeurs 4a, 4b peuvent être situés dans un emplacement tel qu'une pièce (différent de l'emplacement où l'air est conditionné) comprenant des moyens de ventilation.

Le deuxième fluide frigorigène circulant dans le circuit secondaire 2 peut comprendre un ou plusieurs composés de transfert de chaleur choisis parmi une hydrofluorooléfine, une hydrochlorofluorooléfine, ainsi que des combinaisons de celles-ci. Selon l'invention, le deuxième fluide frigorigène comprend ou consiste en du 1,1,1,4,4,4-hexafluoro-2-butène sous forme cis et/ou trans (HFO-1336mzz). Parmi les hydrochlorofluorooléfines, comme ingrédient supplémentaire possible, on peut notamment citer le 1-chloro-3,3,3-trifluoropropène (HCFO-1233zd) sous forme cis ou trans et le 1-chloro-2,3,3,3-tetrafluoropropène (HCFO-1224yd) sous forme cis ou trans. De préférence, le HCFO-1233zd ainsi que le HCFO-1224yd sont sous forme trans.

Le deuxième fluide frigorigène peut ainsi consister (ou consister essentiellement) en du HFO-1336mzz sous forme cis. Le deuxième fluide frigorigène peut consister (ou consister essentiellement) en du HFO-1336mzz sous forme trans. Le deuxième fluide frigorigène peut consister (ou consister essentiellement) en un mélange de HFO-1336mzz sous forme cis et trans.

Dans d'autres modes de réalisation, le deuxième fluide frigorigène est un mélange, qui comporte le HFO-1336mzzZ ou HFO-1336mzzE, et qui peut comporter additionnellement un ou plusieurs des composés suivants :
HCFO-1233zdE, HFO-1336mzzZ, HFO-1336mzzE, HCFO-1224yd.

Le deuxième fluide frigorigène consiste essentiellement, voire consiste, en un ou plusieurs composés de transfert de chaleur.

Dans certains modes de réalisation, le deuxième fluide frigorigène est associé, dans le circuit secondaire 2, à des lubrifiants et/ou des additifs - pour former une deuxième composition de transfert de chaleur.

Les additifs qui peuvent être présents en association avec le deuxième fluide frigorigène peuvent notamment être choisis parmi les nanoparticules, les stabilisants, les tensioactifs, les agents traceurs, les agents fluorescents, les agents odorants et les agents de solubilisation.

La quantité totale en additifs, n'excède de préférence pas 5 % en poids, en particulier 4 %, en plus particulier 3 % et tout particulièrement 2 % en poids voire 1 % en poids de deuxième fluide frigorigène.

Dans certains modes de réalisation, le deuxième fluide frigorigène contient des impuretés. Lorsqu'elles sont présentes, elles peuvent représenter moins de 1 %, de préférence moins de 0,5 %, de préférence moins de 0,1 %, de préférence moins de 0,05 % et de préférence moins de 0,01 % (en poids) par rapport au deuxième fluide frigorigène.

De préférence, le deuxième fluide frigorigène circulant dans le circuit secondaire 2 ne contient pas des composés de transfert de chaleur inflammables, ou il est à tout le moins non-inflammable en tant que tel.

Le caractère « *non-inflammable* » d'un fluide est apprécié au sens de la norme ASHRAE 34-2007, avec une température de test de 60°C au lieu de 100°C.

Dans certains modes de réalisation, le deuxième fluide frigorifique présente un GWP inférieur ou égal à 1100 ; ou inférieur ou égal à 1000 ; ou inférieur ou égal à 900 ; ou inférieur ou égal à 800 ; ou inférieur ou égal à 700 ; ou inférieur ou égal à 600 ; ou inférieur ou égal à 500 ; ou inférieur ou égal à 400 ; ou inférieur ou égal à 300 ; ou inférieur ou égal à 200 ; ou inférieur ou égal à 150 ; ou inférieur ou égal à 100 ; ou inférieur ou égal à 50.

Dans certains modes de réalisation, le deuxième fluide frigorigène peut avoir une température d'ébullition inférieure à 50°C, et de préférence inférieure à 40°C. Ainsi, la température d'ébullition du deuxième fluide frigorigène peut notamment être de 0 à 5°C ; ou de 5 à 10°C ; ou de10 à 15°C ; ou de 15 à 20°C ; ou de 20 à 25°C ; ou de 25 à 30°C ; ou de 30 à 35°C ; ou de 35 à 40°C ; ou de 40 à 45°C ; ou de 45 à 50°C.

L'installation selon l'invention peut également comprendre un ou plusieurs boitiers de distribution 8a, 8b qui permettent de contrôler l'alimentation des échangeurs de chaleur additionnels 6a, 6b, 6cde manière individuelle. Certains échangeurs de chaleur additionnels 6a, 6b, 6c peuvent toutefois être couplés et ainsi alimentés conjointement, comme illustré.

Plus précisément, ce ou ces boitiers de distribution 8a, 8b, peuvent être situés à l'intérieur ou à l'extérieur du ou des bâtiments C dont l'air est conditionné, et ils peuvent comporter une série de vannes capables de gérer l'alimentation du circuit secondaire 2, c'est-à-dire alimenter les différents échangeurs de chaleur additionnels 6a, 6b, 6c avec le deuxième fluide frigorigène.

### Procédé de conditionnement d'air

Le système de compression de vapeur du circuit principal 1 fonctionne de préférence selon un cycle classique de compression de vapeur. Le cycle comprend le changement d'état du premier fluide frigorigène d'une phase liquide (ou diphasique liquide/vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le circuit secondaire 2, le deuxième fluide frigorigène change de préférence également d'état dans les échangeurs de chaleur respectifs, de la phase vapeur (ou un état diphasique) vers la phase liquide (ou un état diphasique), et de la phase liquide (ou un état diphasique) vers la phase vapeur (ou un état diphasique). Mais le deuxième fluide frigorigène ne subit pas de compression ni de détente. Il est simplement pompé de sorte à vaincre les pertes de charge du circuit et à permettre sa circulation.

En faisant toujours référence à la **figure 1** et la **figure 2****,** en mode climatisation, le premier fluide frigorigène en sortant du compresseur 5 sous forme gazeuse se dirige vers le premier échangeur de chaleur 3 qui joue dans ce cas le rôle du condenseur, permettant de transférer de la chaleur du premier fluide frigorigène à l'environnement (typiquement l'air extérieur). Cela a comme résultat la condensation du premier fluide frigorigène. Par la suite, le premier fluide frigorigène traverse un détendeur (non-illustré sur la figure) et se dirige vers un deuxième échangeur de chaleur 4a qui joue le rôle de l'évaporateur pour le premier fluide frigorigène (et du condenseur pour le deuxième fluide frigorigène). De la chaleur est ainsi transférée du deuxième fluide frigorigène vers le premier fluide frigorigène. Le premier fluide frigorigène se dirige ensuite vers le compresseur 5 pour recommencer le cycle de réfrigération. Le deuxième fluide frigorigène se dirige quant à lui, grâce à la pompe 7a du circuit secondaire 2, vers un ou plusieurs échangeurs de chaleur additionnels 6a, 6b, 6c. Le ou les échangeurs de chaleur additionnels 6a, 6b, 6c jouent ici le rôle d'évaporateurs permettant le transfert de chaleur de l'air devant être conditionné vers le deuxième fluide frigorigène. Cela a comme résultat l'évaporation du deuxième fluide frigorigène et le refroidissement de l'air à conditionner. Le deuxième fluide frigorigène se dirige ensuite vers le deuxième échangeur de chaleur 4a pour recommencer le cycle.

En mode chauffage, le premier fluide frigorigène étant en phase liquide ou diphasique se dirige vers le premier échangeur de chaleur 3 qui joue dans ce cas le rôle de l'évaporateur et qui transfère de la chaleur de l'environnement (typiquement l'air extérieur) vers le premier fluide frigorigène. Cela a comme résultat l'évaporation du premier fluide frigorigène. Par la suite, le premier fluide frigorigène traverse le compresseur 5 et se dirige vers un deuxième échangeur de chaleur 4b qui joue le rôle du condenseur pour le premier fluide frigorigène (et de l'évaporateur pour le deuxième fluide frigorigène). De la chaleur est ainsi transférée du premier fluide frigorigène vers le deuxième fluide frigorigène. Le premier fluide frigorigène traverse ensuite le détendeur et se dirige vers le premier échangeur de chaleur 3 pour recommencer le cycle. Le deuxième fluide frigorigène se dirige quant à lui, vers un ou plusieurs échangeurs de chaleur additionnels 6a, 6b, 6c. Le ou les échangeurs de chaleur additionnels 6a, 6b, 6c jouent ici le rôle de condenseurs permettant le transfert de chaleur du deuxième fluide frigorigène vers l'air à conditionner. Cela a comme résultat la condensation du deuxième fluide frigorigène et le chauffage de l'air à conditionner. Le deuxième fluide frigorigène se dirige ensuite grâce à la pompe 7b vers le deuxième échangeur de chaleur 4b pour recommencer le cycle.

En particulier lorsque le chauffage et la climatisation sont mis en œuvre simultanément, il est possible de prévoir une récupération d'énergie, par exemple au moyen de transfert direct de calories d'une partie du circuit secondaire 2 à une autre partie du circuit secondaire 2 par une simple circulation du deuxième fluide frigorigène.

### EXEMPLE

L'exemple suivant illustre l'invention sans la limiter. Cet exemple vise à comparer le débit nécessaire en deuxième fluide frigorigène lorsque l'installation selon l'invention est utilisée pour la climatisation d'un bâtiment à 10°C avec une puissance de 1 kW. La température del'air conditionné est de 15°C.

De l'eau, du HFO-1233zdE et du HFO-1336mzzE sont utilisés en tant que fluides frigorigènes circulant dans les échangeurs de chaleur d'une installation, et sont comparés avec du R410A dans une installation conventionnelle. Les résultats sont présentés dans les deux tableaux ci-dessous, dans lequel les températures à l'entrée et à la sortie des évaporateurs sont indiquées, ainsi que l'énergie massique délivrée par le système.

| **Produit** | **Température d'entrée (°C)** | **Température de sortie (°C)** | **Energie (kJ/kg)** | **Débit (kg/h)** |
|---|---|---|---|---|
| Eau | 5 | 10 | 21 | 171 |
| HFO-1233zdE | 10 | 10 | 200 | 18 |
| HFO-1336mzzE | 10 | 10 | 147 | 25 |
| R-410A | 10 | 10 | 208 | 17 |

Ces résultats du premier tableau indiquent que l'utilisation d'un fluide frigorigène selon l'invention tel que le HFO-1336mzzE permet d'appliquer un débit plus faible que celui qui devrait être appliqué lorsque l'eau est utilisée comme fluide caloporteur. Cela a comme résultat la diminution des problèmes de vibrations et de bruit. Ce débit est équivalent au débit obtenu avec le produit de référence (R410A).

| **Produit** | **Densité liquide** | **Pression (bar)** | **Vitesse du fluide (m/s)** | **Diamètre tuyauterie (mm)** | **% variation du diamètre** |
|---|---|---|---|---|---|
| Eau | 1000 | - | 2 | 5,5 | 330 |
| HFO-1233zdE | 1300 | 0,73 | 2 | 1,6 | 0 |
| HFO-1336mzzE | 1525 | 1,15 | 2 | 1,6 | 0 |
| R-410A | 1128 | 11 | 2 | 1,6 | 0 |

Les résultats du deuxième tableau indiquent que l'utilisation d'un fluide frigorigène selon l'invention tel que le HFO-1336mzzE, permet l'utilisation de tuyauteries ayant un diamètre plus petit par rapport aux tuyauteries utilisées lorsque l'eau est utilisée comme fluide frigorigène afin de livrer la même puissance. Ces diamètres sont les mêmes que ceux utilisés avec le produit de référence R410A. De plus, les fluides frigorigènes selon l'invention présentent une pression inférieure à la pression du R-410A, ce qui permet de diminuer le risque de fuites.

## Revendications

1. Procédé de conditionnement de l'air, au moyen d'un circuit principal (1), le circuit principal (1) étant un circuit de compression de vapeur, dans lequel circule un premier fluide frigorigène, et d'un circuit secondaire (2) dépourvu de compresseur, dans lequel circule un deuxième fluide frigorigène non-inflammable comprenant une hydrofluorooléfine et/ou une hydrochlorofluorooléfine, le circuit principal (1) et le circuit secondaire (2) étant couplés l'un avec l'autre ; le procédé comprenant un échange de chaleur entre l'environnement et le premier fluide frigorigène, un échange de chaleur entre le premier et le deuxième fluide frigorigène, et un échange de chaleur entre le deuxième fluide frigorigène et l'air à conditionner, **caractérisé en ce que** le deuxième fluide frigorigène comprend ou consiste en du 1,1,1,4,4,4-hexafluoro-2-butène sous forme cis et/ou trans.

2. Procédé selon la revendication 1, dans lequel le premier fluide frigorigène comprend une hydrofluorooléfine, une hydrochlorofluorooléfine, un hydrofluorocarbure, un hydrochlorofluorocarbure, et/ou des mélanges de ceux-ci ; et de préférence le premier fluide frigorigène comprend du 1,3,3,3-tetrafluoropropène, du 2,3,3,3-tétrafluoropropène, du difluorométhane, du pentafluoroéthane, du 1,1,2,2-tétrafluoroéthane, du 1,1,1,2-tétrafluoroéthane, du 1,1-difluoroéthane, du fluoroéthane, du 1,1,1,2,3,3,3-heptafluoropropane, du 1,1,1-trifluoropropane, du trifluoroiodométhane, du trifluoroéthylène ou des mélanges de ceux-ci.

3. Procédé selon l'une des revendications 1 à 2, dans lequel le deuxième fluide frigorigène a une température d'ébullition inférieure à 50°C, et de préférence inférieure à 40°C.

4. Procédé selon l'une des revendications 1 à 3, étant un procédé de climatisation, et/ou de chauffage de l'air.

5. Procédé selon la revendication 1 à 4, étant un procédé de conditionnement d'air stationnaire, de préférence un procédé de conditionnement d'air de locaux d'habitation, de locaux industriels et/ou de locaux commerciaux.

6. Installation pour le conditionnement de l'air comprenant :
- un circuit principal (1), le circuit principal (1) étant un circuit de compression de vapeur, dans lequel circule un premier fluide frigorigène, ce circuit principal (1) comportant un échangeur de chaleur (3) permettant l'échange de chaleur entre le premier fluide frigorigène et l'environnement ; et
- un circuit secondaire (2) dépourvu de compresseur, dans lequel circule un deuxième fluide frigorigène non-inflammable comprenant une hydrofluorooléfine et/ou une hydrochlorofluorooléfine, ce circuit secondaire (2) comportant un échangeur de chaleur (6a, 6b, 6c) permettant l'échange de chaleur entre le deuxième fluide frigorigène et l'air à conditionner ;
le circuit principal (1) et le circuit secondaire (2) étant couplés l'un avec l'autre par au moins un échangeur de chaleur (4a, 4b) **caractérisé en ce que** le deuxième fluide frigorigène comprend du 1,1,1,4,4,4-hexafluoro-2-butène sous forme cis et/ou trans.

7. Installation selon la revendication 6, dans laquelle le premier fluide frigorigène comprend une hydrofluorooléfine, une hydrochlorofluorooléfine, un hydrofluorocarbure, un hydrochlorofluorocarbure, et/ou des mélanges de ceux-ci ; et de préférence le premier fluide frigorigène comprend du 1,3,3,3-tetrafluoropropène, du 2,3,3,3-tétrafluoropropène, du difluorométhane, du chlorodifluorométhane, du pentafluoroéthane, du 1,1,2,2-tétrafluoroéthane, du 1,1,1,2-tétrafluoroéthane, du 1,1-difluoroéthane, du fluoroéthane, du 1,1,1,2,3,3,3-heptafluoropropane, du 1,1,1-trifluoropropane ou des mélanges de ceux-ci.

8. Installation selon l'une des revendications 6 à 7, dans laquelle le deuxième fluide frigorigène a une température d'ébullition inférieure à 50°C, et de préférence inférieure à 40°C.

9. Installation selon l'une des revendications 6 à 8, dans laquelle le circuit secondaire (2) comprend au moins une pompe (7a).

10. Installation selon l'une des revendications 6 à 9, configurée pour la climatisation et/ou le chauffage de l'air, et de préférence configurée pour la climatisation et le chauffage de l'air, de manière séquentielle ou éventuellement simultanée.

11. Installation selon la revendication 6 à 10, configurée pour le conditionnement d'air stationnaire, de préférence configurée pour le conditionnement d'air de locaux d'habitation, de locaux industriels et/ou de locaux commerciaux.

12. Installation selon l'une des revendications 6 à 11, configurée pour le conditionnement d'air de locaux, dans laquelle le circuit principal (1) est situé à l'extérieur des locaux, et le circuit secondaire (2) est situé au moins en partie dans les locaux.

13. Installation selon l'une des revendications 6 à 12, comprenant un échangeur de chaleur (4a) dans lequel le premier fluide frigorigène et le deuxième fluide frigorigène échangent de la chaleur pour fournir la climatisation de l'air, et un autre échangeur de chaleur (4b) dans lequel le premier fluide frigorigène et le deuxième fluide frigorigène échangent de la chaleur pour fournir le chauffage de l'air.

## Patentansprüche

1. Verfahren zur Konditionierung von Luft mittels eines Hauptkreislaufs (1), wobei der Hauptkreislauf (1) ein Dampfkompressionskreislauf ist, in welchem ein erstes Kältemittel strömt, und eines Nebenkreislaufs (2) ohne Kompressor, in welchem ein zweites, nicht brennbares Kältemittel strömt, das ein Hydrofluorolefin und/oder ein Hydrochlorfluorolefin umfasst, wobei der Hauptkreislauf (1) und der Nebenkreislauf (2) miteinander gekoppelt sind; wobei das Verfahren einen Wärmeaustausch zwischen der Umgebung und dem ersten Kältemittel, einen Wärmeaustausch zwischen dem ersten und dem zweiten Kältemittel sowie einen Wärmeaustausch zwischen dem zweiten Kältemittel und der zu konditionierenden Luft umfasst, **dadurch gekennzeichnet, dass** das zweite Kältemittel 1,1,1,4,4,4-Hexafluor-2-buten in cis- und/oder trans-Form umfasst oder daraus besteht.

2. Verfahren nach Anspruch 1, wobei das erste Kältemittel ein Hydrofluorolefin, ein Hydrochlorfluorolefin, einen Fluorkohlenwasserstoff, einen Fluorchlorkohlenwasserstoff und/oder Mischungen aus diesen umfasst; und das erste Kältemittel vorzugsweise 1,3,3,3-Tetrafluorpropen, 2,3,3,3-Tetrafluorpropen, Difluormethan, Pentafluorethan, 1,1,2,2-Tetrafluorethan, 1,1,1,2-Tetrafluorethan, 1,1-Difluorethan, Fluorethan, 1,1,1,2,3,3,3-Heptafluorpropan, 1,1,1-Trifluorpropan, Trifluoriodmethan, Trifluorethylen oder Mischungen aus diesen umfasst.

3. Verfahren nach einem der Ansprüche 1 bis 2, wobei das zweite Kältemittel eine Siedetemperatur von weniger als 50 °C, vorzugsweise von weniger als 40 °C hat.

4. Verfahren nach einem der Ansprüche 1 bis 3, wobei es sich um ein Verfahren zur Klimatisierung und/oder zum Erwärmen von Luft handelt.

5. Verfahren nach Anspruch 1 bis 4, wobei es sich um ein Verfahren zur Konditionierung ruhender Luft, vorzugsweise um ein Verfahren zur Konditionierung der Luft von Wohnräumen, industriellen Räumen und/oder Geschäftsräumen handelt.

6. Anlage zur Konditionierung von Luft, umfassend:
- einen Hauptkreislauf (1), wobei es sich bei dem Hauptkreislauf (1) um einen Dampfkompressionskreislauf handelt, in welchem ein erstes Kältemittel strömt, wobei der Hauptkreislauf (1) einen Wärmetauscher (3) aufweist, der einen Wärmeaustausch zwischen dem ersten Kältemittel und der Umgebung ermöglicht; und
- einen Nebenkreislauf (2) ohne Kompressor, in welchem ein zweites nicht entflammbares Kältemittel strömt, das ein Hydrofluorolefin und/oder ein Hydrochlorfluorolefin umfasst, wobei der Nebenkreislauf (2) einen Wärmetauscher (6a, 6b, 6c) aufweist, der einen Wärmeaustausch zwischen dem zweiten Kältemittel und der zu konditionierenden Luft ermöglicht;
wobei der Hauptkreislauf (1) und der Nebenkreislauf (2) über mindestens einen Wärmetauscher (4a, 4b) miteinander gekoppelt sind, **dadurch gekennzeichnet, dass** das zweite Kältemittel 1,1,1,4,4,4-Hexafluor-2-buten in cis-und/oder trans-Form umfasst.

7. Anlage nach Anspruch 6, wobei das erste Kältemittel ein Hydrofluorolefin, ein Hydrochlorfluorolefin, einen Fluorkohlenwasserstoff, einen Fluorchlorkohlenwasserstoff und/oder Mischungen aus diesen umfasst; und das erste Kältemittel vorzugsweise 1,3,3,3-Tetrafluorpropen, 2,3,3,3-Tetrafluorpropen, Difluormethan, Chlordifluormethan, Pentafluorethan, 1,1,2,2-Tetrafluorethan, 1,1,1,2-Tetrafluorethan, 1,1-Difluorethan, Fluorethan, 1,1,1,2,3,3,3-Heptafluorpropan, 1,1,1-Trifluorpropan oder Mischungen aus diesen umfasst.

8. Anlage nach einem der Ansprüche 6 bis 7, wobei das zweite Kältemittel eine Siedetemperatur von weniger als 50 °C, vorzugsweise von weniger als 40 °C hat.

9. Anlage nach einem der Ansprüche 6 bis 8, wobei der Nebenkreislauf (2) mindestens eine Pumpe (7a) umfasst.

10. Anlage nach einem der Ansprüche 6 bis 9, wobei sie dafür ausgelegt ist, Luft zu klimatisieren und/oder zu erwärmen, und vorzugsweise dafür ausgelegt ist, Luft nacheinander oder gegebenenfalls gleichzeitig zu klimatisieren und zu erwärmen.

11. Anlage nach Anspruch 6 bis 10, wobei sie dafür ausgelegt ist, ruhende Luft zu konditionieren, und vorzugsweise dafür ausgelegt ist, Luft von Wohnräumen, industriellen Räumen und/oder Geschäftsräumen zu konditionieren.

12. Anlage nach einem der Ansprüche 6 bis 11, wobei sie dafür ausgelegt ist, Luft von Räumen zu konditionieren, wobei sich der Hauptkreislauf (1) außerhalb der Räume befindet und sich der Nebenkreislauf (2) zumindest teilweise in den Räumen befindet.

13. Anlage nach einem der Ansprüche 6 bis 12, wobei sie einen Wärmetauscher (4a), in welchem das erste Kältemittel und das zweite Kältemittel Wärme austauschen, um die Klimatisierung der Luft bereitzustellen, und einen weiteren Wärmetauscher (4b) umfasst, in welchem das erste Kältemittel und das zweite Kältemittel Wärme austauschen, um die Erwärmung der Luft bereitzustellen.

## Claims

1. Process for air conditioning, by means of a main circuit (1), the main circuit (1) being a vapour compression circuit, in which circulates a first refrigerant fluid, and of a secondary circuit (2) not comprising a compressor, in which circulates a nonflammable second refrigerant fluid comprising a hydrofluoroolefin and/or a hydrochlorofluoroolefin, the main circuit (1) and the secondary circuit (2) being coupled together; the process comprising heat exchange between the environment and the first refrigerant fluid, heat exchange between the first and the second refrigerant fluid, and heat exchange between the second refrigerant fluid and the air to be conditioned, **characterized in that** the second refrigerant fluid comprises or consists of 1,1,1,4,4,4-hexafluoro-2-butene in cis and/or trans form.

2. Process according to Claim 1, in which the first refrigerant fluid comprises a hydrofluoroolefin, a hydrochlorofluoroolefin, a hydrofluorocarbon, a hydrochlorofluorocarbon, and/or mixtures thereof; and preferably the first refrigerant fluid comprises 1,3,3,3-tetrafluoropropene, 2,3,3,3-tetrafluoropropene, difluoromethane, pentafluoroethane, 1,1,2,2-tetrafluoroethane, 1,1,1,2-tetrafluoroethane, 1,1-difluoroethane, fluoroethane, 1,1,1,2,3,3,3-heptafluoropropane, 1,1,1-trifluoropropane, trifluoroiodomethane, trifluoroethylene or mixtures thereof.

3. Process according to either of Claims 1 and 2, in which the second refrigerant fluid has a boiling point of less than 50°C, and preferably less than 40°C.

4. Process according to one of Claims 1 to 3, which is a process for cooling and/or for heating air.

5. Process according to Claim 1 to 4, which is a stationary air-conditioning process, preferably a process for conditioning air of residential premises, of industrial premises and/or of commercial premises.

6. Air-conditioning facility comprising:
- a main circuit (1), the main circuit (1) being a vapour compression circuit, in which circulates a first refrigerant fluid, this main circuit (1) including a heat exchanger (3) for heat exchange between the first refrigerant fluid and the environment; and
- a secondary circuit (2) not comprising a compressor, in which circulates a nonflammable second refrigerant fluid comprising a hydrofluoroolefin and/or a hydrochlorofluoroolefin, this secondary circuit (2) including a heat exchanger (6a, 6b, 6c) for heat exchange between the second refrigerant fluid and the air to be conditioned;
the main circuit (1) and the secondary circuit (2) being coupled together via at least one heat exchanger (4a, 4b), **characterized in that** the second refrigerant fluid comprises 1,1,1,4,4,4-hexafluoro-2-butene in cis and/or trans form.

7. Facility according to Claim 6, in which the first refrigerant fluid comprises a hydrofluoroolefin, a hydrochlorofluoroolefin, a hydrofluorocarbon, a hydrochlorofluorocarbon, and/or mixtures thereof; and preferably the first refrigerant fluid comprises 1,3,3,3-tetrafluoropropene, 2,3,3,3-tetrafluoropropene, difluoromethane, chlorodifluoromethane, pentafluoroethane, 1,1,2,2-tetrafluoroethane, 1,1,1,2-tetrafluoroethane, 1,1-difluoroethane, fluoroethane, 1,1,1,2,3,3,3-heptafluoropropane, 1,1,1-trifluoropropane or mixtures thereof.

8. Facility according to either of Claims 6 and 7, in which the second refrigerant fluid has a boiling point of less than 50°C, and preferably less than 40°C.

9. Facility according to one of Claims 6 to 8, in which the secondary circuit (2) comprises at least one pump (7a).

10. Facility according to one of Claims 6 to 9, which is configured for cooling and/or heating air, and preferably configured for cooling and heating air, sequentially or optionally simultaneously.

11. Facility according to Claim 6 to 10, which is configured for stationary air-conditioning, preferably configured for conditioning air of residential premises, of industrial premises and/or of commercial premises.

12. Facility according to one of Claims 6 to 11, which is configured for conditioning air of premises, in which the main circuit (1) is positioned outside the premises, and the secondary circuit (2) is positioned at least partly in the premises.

13. Facility according to one of Claims 6 to 12, comprising a heat exchanger (4a) in which the first refrigerant fluid and the second refrigerant fluid exchange heat to provide cooling of the air, and another heat exchanger (4b) in which the first refrigerant fluid and the second refrigerant fluid exchange heat to provide heating of the air.
